# EUROPÄISCHE PATENTSCHRIFT

(11) **EP 0 890 757 B1**
(45) Veröffentlichungstag und Bekanntmachung des Hinweises auf die Patenterteilung: **08.08.2001**
(21) Anmeldenummer: 98106215.1
(22) Anmeldetag: 04.04.1998
(51) Int. Cl.: F16D 48/02

(54) **Hydraulische Steuerung für schaltbare Verbindungselemente, insbesondere für eine fremdgeschaltete Kupplung an einem Antriebsmotor**
Hydraulic control of disengageable coupling elements, especially of an externally controlled drive motor clunch
Commande hydraulique pour des éléments de couplage débrayables, en particulier pour l'embrayage commandé d'un moteur d'entraînement

(30) Priorität: 11.07.1997 DE 19729693
(43) Veröffentlichungstag der Anmeldung: 13.01.1999
(73) Patentinhaber: CLAAS Industrietechnik GmbH, 33106 Paderborn (DE)
(72) Erfinder: Franke, Helmut, 33428 Harsewinkel (DE)
(74) Vertreter: Weeg, Thomas

(56) Entgegenhaltungen:
- WO-A-79/00723
- DE-A- 3 619 044
- PATENT ABSTRACTS OF JAPAN vol. 010, no. 231 (M-506), 12. August 1986 & JP 61 065919 A (MITSUBISHI HEAVY IND LTD), 4. April 1986

## Beschreibung

Die Erfindung bezweckt die Schaffung einer hydraulischen Steuerung für schaltbare Verbindungselemente, insbesondere für eine fremdgeschaltete Kupplung an einem Antriebsmotor, mit einer einen Ölstrom erzeugenden Pumpe, einem den Fließweg des Ölstroms bestimmenden Wegeventil, einer in einem Fließweg eingesetzten, ein Druckgefälle im Ölstrom bewirkenden Drossel als Messblende, einem mit einem Vor- und Rücklauf an den Fließweg der ersten Drossel vor und hinter der Drossel angeschlossenen Regelventil mit einem vom höheren Öldruck beaufschlagten, entgegen einer Federkraft verschiebbaren Regelkolben, einer am Regelkolben vorgesehenen Steuernut, welche mit einem zwischen der Kolbenkammer und der Federkammer des Regelventils angeordneten Abzweig mit einer Kupplungs- und Tankleitung zusammenwirkt, und einer in eine von der Federkammer in deren Endbereich zum Rücklauf abgehenden Ausgangsleitung eingesetzten, auf die Schließzeit der Kupplung einstellbaren zweiten Drossel als Zeitblende.

Eine gattungsgemäße Steuereinrichtung ist aus der WO-A-7900723 bekannt. Das Schaltverhalten der Steuereinrichtung ist jedoch zeitverzögert, weil der interne Druckausgleich immer über das zwischengeschaltete Drosselventil erfolgen muß und ein je nach Drosselquerschnitt kürzerer oder längerer Zeitraum verstreicht, bevor die Druckkolben ihre Gleichgewichtslage eingenommen haben.

Demgegenüber ist es die Aufgabe der vorliegenden Erfindung, das Schaltverhalten zu beschleunigen, ohne dadurch die Vorteile eines drosselbegrenzten Druckaufbaus in der Steuerung zu verlieren.

Diese Aufgabe wird gelöst, indem die Steuerung einen von der Federkammer im Abstand vor deren Ausgangsleitung abgehenden, mit dem Rücklauf verbundenen und vom Regelkolben auf einem Kurzhub absperrbaren Entlastungsausgang aufweist.

Die sich daran anschließenden Unteransprüche beinhalten Gestaltungsmerkmale, welche vorteilhafte und förderliche Weiterbildungen der Aufgabenlösung darstellen.

Die hydraulische Steuerung gemäß der Erfindung ermöglicht in einfacher und kostengünstiger sowie sicherer Weise eine Beschleunigung anzutreibender Massen mit einer maximalen, im Gleichgewicht zu dem Ausgangsmoment des treibenden Motors stehenden Drehmomentes und ein sanftes Beschleunigen geringerer Massen in einem vorgegebenen Zeitrahmen.

Der Einsatzbereich der Steuerung (des Steuergerätes) dieser Erfindung ist vielseitig.

Das Steuergerät kann in vielen Anwendungen eingesetzt werden, in denen eine drehzahl- oder momentenabhängige Betätigung eines hydraulischen Verbrauchers gefordert wird. In den Zeichnungen ist die druckaufbauende Variante dargestellt. Bei spiegelbildlicher Betrachtung der Feinsteuernut ist eine druckentlastende Steuerung des Verbrauchers (Kupplung) möglich. In diesem Falle würde der Verbraucher bzw. ein treibender Strang bei sinkender Drehzahl zugeschaltet werden. Ein Beispiel wäre hier eine Maschine, die im normalen Arbeitseinsatz eine geringe treibende Kraft benötigt. Bei Überlastung des Antriebs würde die Arbeitsdrehzahl der Maschine sinken und damit das Zuschalten einer zusätzlichen Energiequelle bewirken.

Die zeichnerische Darstellung zielt auf die Betätigung einer hydraulisch beaufschlagten Kupplung, z.B. den Nebenabtrieb eines Trägerfahrzeugs ab, an dessen Zapfwelle unterschiedliche Arbeitsgeräte angeschlossen werden. Die Zuschaltung des Nebenabtriebs erfolgt über eine Ein-/Aus-Funktion, in diesem Falle das Magnetventil im Steuergerät. Die Arbeitsgeräte können eine sehr große Schwungmasse haben, die so große Beschleunigungsmomente erfordern, die der Motor nicht aufbringen kann. Der Motor wird während der Beschleunigung in seiner Drehzahl gedrückt. Dadurch wird der Schließdruck an der Kupplung reduziert und somit das derzeitig übertragene Moment an der Kupplung. Zwischen dem Ausgangsmoment des Motors und dem übertragenen Drehmoment an der Kupplung stellt sich ein Gleichgewichtszustand ein, der so lange aufrecht erhalten wird, bis das Arbeitsgerät die Betriebsdrehzahl erreicht hat und keine weiteren Beschleunigungsmomente auftreten. Die Anfahrdrehzahl der Zapfwelle kann daher in dem unteren Drehzahlbereich eines Motors angesetzt werden, bei dem die Drehmomente weitaus geringer sind als das Nennmoment. Weiterhin verhindert das Regelventil das Abwürgen des Motors bei Überlast. Das Regelventil kann mit mehreren Messblenden versehen werden, die über Magnetventile geschaltet werden, um unterschiedliche Drehzahlbereiche festzulegen; auch der Einsatz verstellbarer Blenden ist möglich.

Ein weiterer Einsatzfall ist die Betätigung der Kupplung in Fahrzeugen. Bei niedriger Fahrgeschwindigkeit, besonders bei "Stop and Go-Verkehr" würde das mechanische Betätigen der Kupplung entfallen. Durch geringfügiges Ändern der Motorendrehzahl würde die Kupplungsbetätigung durch das Regelventil übernommen werden.

Auf den Zeichnungen ist ein Ausführungsbeispiel der Erfindung dargestellt, welches nachfolgend näher erläutert wird. Es zeigt:
- Fig. 1: eine schematische Schnittdarstellung einer hydraulischen Kupplungssteuerung mit ausgeschaltetem Wegeventil und Regelkolben in der Ausgangsstellung,
- Fig. 2: eine schematische Schnittdarstellung derselben hydraulischen Kupplungssteuerung mit eingeschaltetem Wegeventil und in die Kupplung schließenden Stellung verschobenem Regelkolben.

Die hydraulische Steuerung für schaltbare Verbindungselemente, insbesondere für eine fremdgeschaltete Kupplung (K) an einem Antriebsmotor, weist eine einen Ölstrom erzeugende Pumpe (P) und ein den Fließweg des Ölstroms bestimmendes Wegeventil (WV) auf.

In einem Fließweg (1) ist eine ein Druckgefälle im Ölstrom bewirkende erste Drossel (2) als Messblende eingesetzt.

Ein mit einem Vor- und Rücklauf (3, 4) an den Fließweg (1) der ersten Drossel (2) vor und hinter der Drossel (2) angeschlossenes Regelventil (RV) besitzt einen vom höheren Öldruck beaufschlagten, entgegen einer Federkraft (5) verschiebbaren Regelkolben (6), welcher eine Steuernut - Feinsteuernut - (7) zeigt, die mit einem zwischen der Kolbenkammer (8) und der Federkammer (9) des Regelventils (RV) angeordneten Abzweig (10a, 10b) mit einer Kupplungs- und einer Tankleitung (11, 12) zusammenwirkt.

Von der Federkammer (9) geht in deren Endbereich zum Rücklauf (4) eine Ausgangsleitung (13) ab, in die eine auf die Schließzeit der Kupplung (K) einstellbare zweite Drossel (14) als Zeitblende eingesetzt ist.

Von der Federkammer (9) geht im Abstand vor deren Ausgangsleitung (13) ein mit dem Rücklauf (4) verbundener und vom Regelkolben (6) auf einem Kurzhub (H) absperrbarer Entlastungsausgang (15) ab.

Der Fließweg der ersten Drossel (2) ist von einer an den Öltank (T) angeschlossenen Druckleitung (1) mit eingesetzter Pumpe (P) gebildet, an die vor und hinter der Drossel (2) eine Bypassleitung (15a) dem eingesetzten Wegeventil (WV) angeschlossen ist.

Der Vorlauf (3) ist von einer am freien Ende der Kolbenkammer (8) in dieselbe einmündenden Zulaufleitung (3) und der Rücklauf (4) von einer zwischen Abzweig (10a, 10b) und freiem Federkammerende abgehenden Ablaufleitung (4) gebildet.

Von der öldruckbeaufschlagten Kolbenfläche (6a) des Regelkolbens (6) führt in denselben eine axiale Bohrung (16) mit Ölstrombegrenzung (17) hinein, von der in Fließrichtung (F) hinter der Ölstrombegrenzung (17) eine Austrittsbohrung (16a) zur Steuernut (7) hin abgeht.

Die Steuernut (7) des Regelkolbens (6) ist von einer am Außenmantel umlaufenden Ringnut mit linearer oder progressiver Steuerfläche (7a, 7b) für die Durchflußregulierung im Abzweig (10a, 10b) gebildet; die ringförmige Steuernut (7) hat dabei auf einem Teilbereich ihrer in Fließrichtung (F) verlaufenden Länge in dem der Kolbenfläche (6a) benachbarten Endbereich eine schräge oder bogenförmige Steuerfläche (7a, 7b), die dann in Fließrichtung (F) in einen parallel zur Kolben-Längsachse geradlinig verlaufenden Nutbereich absatzlos übergeht.

Der Abzweig (10a, 10b) setzt sich aus zwei in Fließrichtung (F) im Abstand hintereinander angeordneten Ringnuten (10a, 10b) zusammen; an eine Ringnut (10a) ist eine Leitung (11) zur Kupplung (K) und an der anderen Ringnut (10b) eine Leitung (12) zum Öltank (T) angeschlossen.

Die Verbindung der beiden Ringnuten (10a, 10b) stellt die ringförmige Steuernut (7) her oder aber sperrt eine gegenüber der anderen ab.

Der Entlastungsausgang (15) ist ebenfalls von einer Ringnut gebildet.

Der Kolben (6) weist an seiner federseitigen Stirnseite eine schräge oder bogenförmige Schließkante (18) auf, die mit dem Entlastungsausgang (15) zusammenwirkt.

Die Federkraft wird von einer in einer Sacklochaufnahme (19) des Regelkolbens (RK) geführten Druckfeder (5) gebildet, die sich am Sacklochboden (19a) einerseits und an der Stirnwand (9a) der Federkammer (9) andererseits abstützt; von dieser Federkammer-Stirnwand (9a) geht die Ausgangsleitung (13) ab.

Durch die Ölstrombegrenzung (17), die von einer Einschnürung in der Bohrung (16) gebildet wird, wird die Ölmenge zur Kupplung (K) begrenzt.

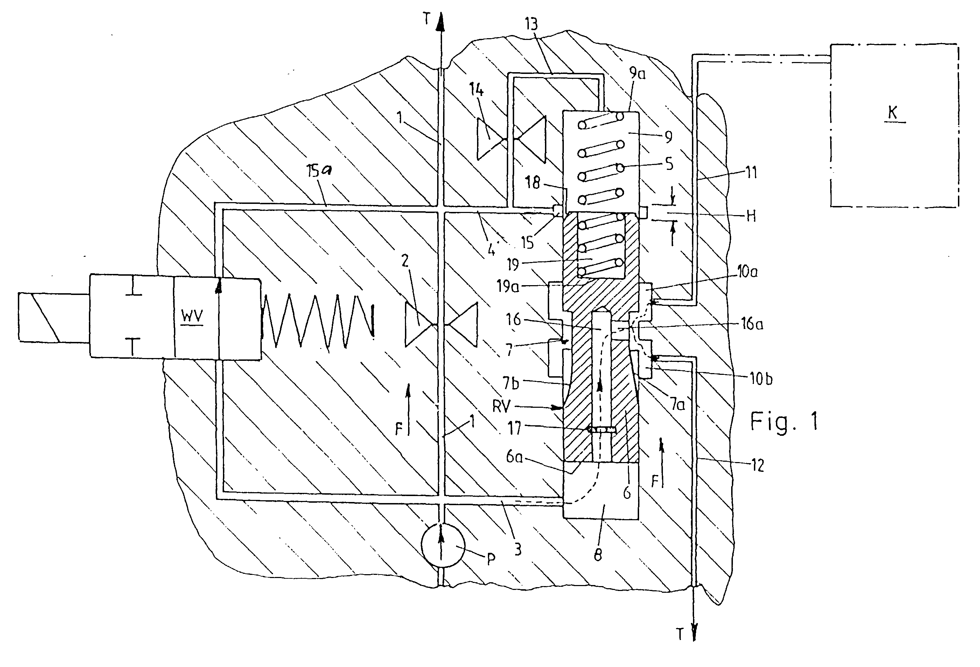

Bei ausgeschaltetem (unbetätigtem) Wegeventil (WV) wird der von der Pumpe (P) geförderte Ölstrom durch die Bypassleitung (15a) und somit an der Messblende (2) vorbei geführt und es entsteht kein Differenzdruck - der Regel-Kolben (6) verbleibt in der in Fig. 1 gezeichneten Ruhestellung.

Der Ölstrom, der über den Vorlauf (3) in den Kolbenraum (8) und durch den Kolben (6) - dessen Bohrungen (16, 18) - strömt, fließt mit gleicher Menge in den Abzweig (10a, 10b) ein und durch die Leitungen (11, 12) zur Kupplung (K) und zum Tank (T) zurück, da sich der Kolben (6) mit seiner Steuerfläche (7) in der Mittelstellung befindet (Fig. 1). Hierbei hat der Antriebsmotor die Mindestdrehzahl und die Kupplung (K) erhält keine weitere Schließbewegung. Dieser Ölfluß ist in Fig. 1 durch die gestrichelte Linie dargestellt.

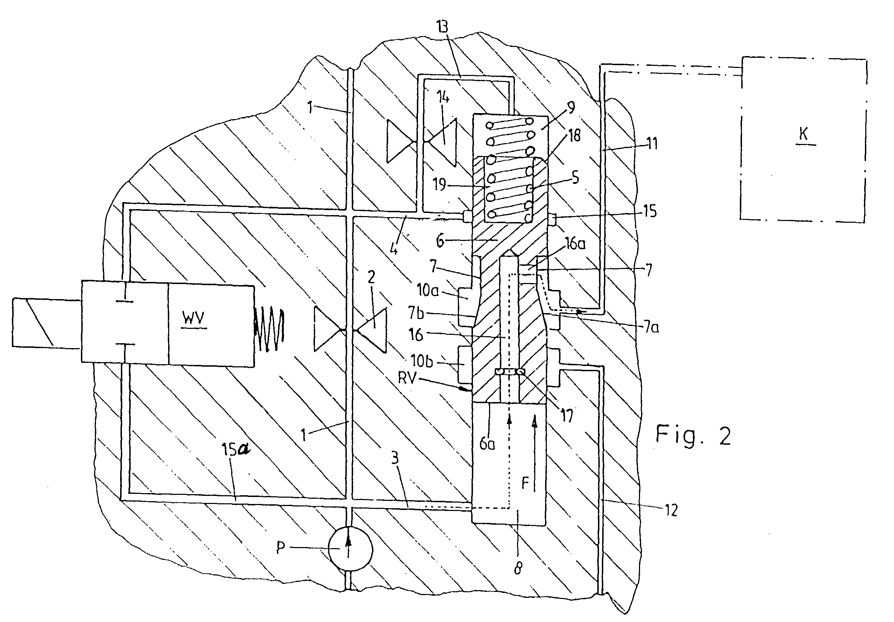

Bei eingeschaltetem Wegeventil (WV) - Fig. 2 - ist die Bypassleitung (15a) gesperrt und der Ölstrom fließt durch die Druckleitung (1) und die Messblende (2), wobei ein Druckgefälle - in Fließrichtung (F) höherer Druck vor und niedrigerer Druck hinter der Messblende (2) - entsteht, so dass der Differenzdruck (höherer Druck) gegen die Federkraft (5) wirkt.

Der Regelkolben (6) wird vom durch den Zulauf (3) in die Kolbenkammer (8) einströmenden Öl beaufschlagt und proportional zur Federkennlinie in seine Endlage bewegt (verschoben). Über diesen Weg wird die Entlastung der Kupplung (K) durch die Steuernut (7) - Feinsteuernut - im Regelkolben 6) aufgehoben und es erfolgt kontinuierlich ein Druckaufbau an der Kupplung (K), der proportional die Kraftübertragung durchführt.

Bei der Druckbeaufschlagung verschiebt sich der Regelkolben (6) und seine Steuerfläche (7) sperrt die Ringnut (10b) zum Ölfluß zum Tank (T) ab und das Öl strömt dann durch die Ringnut (10a) und Leitung (11) zur Kupplung (K) - gestrichelte Linie in Fig. 2 -.

Die Größe der Messblende (2) wird in Abhängigkeit des Drehmomentes des anzutreibenden Motors gewählt, so dass die Betätigung der Kupplung (K) nur dann erfolgt, wenn an dem Motor das gewählte Mindest-Drehmoment vorhanden ist. Überschreitet das übertragene Drehmoment an der Kupplung den gewählten Wert, verliert der Motor an Drehzahl und damit reduziert sich der Ölstrom, das Druckgefälle an der Messblende (2) fällt und damit ebenso das Drehmoment an der Kupplung (K). Es stellt sich ein Gleichgewichtszustand in den Drehmomenten ein.

Die Federkammer (9) des Regelkolbens (6) enthält eine relativ große Ölmenge, die während des Kolbenhubs verdrängt werden muß. Um den Weg zwischen der vollen Entlastung der Kupplung (K) bis zum Beginn der Wirkung der Steuernut (7) schnell zu durchfahren, ist die Entlastungsnut (15) vorgesehen, deren Länge (in Fließrichtung (F) gesehen) auf den Leerhub des Regelkolbens (6) angepasst ist. Der Regelkolben (6) drückt Öl aus der Entlastungsnut (15) heraus und schließt mit seiner Schließkante (18) die Entlastungsnut (15), wobei dieses auf einen schnellen Kurzhub (H) erfolgt.

Ist dieser Kurzhub (H) erfolgt, beginnt die Regelung der Kupplung (K), wobei das Öl aus der Federkammer (9) über die Zeitblende (13) verdrängt werden muß Die Größe der Zeitblende (13) wird auf die gewünschte Schließzeit der Kupplung (K) bei maximalem Differenzdruck an der Messblende (2) abgestimmt, da die Kupplung (K) auch bei voller Motordrehzahl eingeschaltet werden kann. Ohne Zeitblende (14) würde der Regelkolben (6) sofort (plötzlichruckartig) in die Endlage fahren und damit die Kupplung (K) sofort schließen, was zu einer schlagartigen Beschleunigung der anzutreibenden Einrichtung führen würde.

## Patentansprüche

1. Hydraulische Steuerung für schaltbare Verbindungselemente, insbesondere für eine fremdgeschaltete Kupplung an einem Antriebsmotor, mit einer einen Ölstrom erzeugenden Pumpe (P), einem den Fließweg des Ölstroms bestimmenden Wegeventil (WV), einer in einem Fließweg (1) eingesetzten, ein Druckgefälle im Ölstrom bewirkenden Drossel (2) als Messblende, einem mit einem Vor- und Rücklauf (3, 4) an den Fließweg (1) der ersten Drossel (2) vor und hinter der Drossel (2) angeschlossenen Regelventil (RV) mit einem vom höheren Öldruck beaufschlagten, entgegen einer Federkraft (5) verschiebbaren Regelkolben (6), einer am Regelkolben (6) vorgesehenen Steuernut (7), welche mit einem zwischen der Kolbenkammer (8) und der Federkammer (9) des Regelventils (RV) angeordneten Abzweig (10a, 10b) mit einer Kupplungs- und Tankleitung (11, 12) zusammenwirkt, und einer in eine von der Federkammer (9) in deren Endbereich zum Rücklauf (4) abgehenden Ausgangsleitung (13) eingesetzten, auf die Schließzeit der Kupplung (K) einstellbaren zweiten Drossel (14) als Zeitblende,
**dadurch gekennzeichnet,**
daß die Steuerung einen von der Federkammer (9) im Abstand vor deren Ausgangsleitung (13) abgehenden, mit dem Rücklauf (4) verbundenen und vom Regelkolben (6) auf einem Kurzhub (H) absperrbaren Entlastungsausgang (15) aufweist.

2. Steuerung nach Anspruch 1,
**dadurch gekennzeichnet,**
daß der Fließweg (1) der ersten Drossel (2) von einer an den Öltank (T) angeschlossenen Druckleitung (1) mit eingesetzter Pumpe (P) gebildet ist, von der vor und hinter der Drossel (2) eine Bypassleitung (15a) mit eingesetztem Wegeventil (WV) abgeht.

3. Steuerung nach einem der Ansprüche 1 oder 2,
**dadurch gekennzeichnet,**
dass der Vorlauf (3) von einer am freien Ende der Kolbenkammer (8) in dieselbe einmündenden Zulaufleitung (3) und der Rücklauf (4) von einer zwischen Abzweig (10a, 10b) und freiem Federkammerende abgehenden Ablaufleitung (4) gebildet ist.

4. Steuerung nach einem der Ansprüche 1 bis 3,
**dadurch gekennzeichnet,**
dass von der öldruckbeaufschlagten Kolbenfläche (6a) des Regelkolbens (6) eine axiale Bohrung (16) mit Ölstrombegrenzung hineingeführt ist, von der in Fließrichtung (F) hinter der Ölstrombegrenzung (17) eine Austrittsbohrung (16a) zur Steuernut (7) hin abgeht.

5. Steuerung nach einem der Ansprüche 1 bis 4,
**dadurch gekennzeichnet,**
dass die Steuernut (7) des Regelkolbens (6) von einer am Außenmantel umlaufenden Ringnut mit linearer oder progressiver Steuerfläche (7a, 7b) für die Durchflussregulierung im Abzweig (10a, 10b) gebildet ist.

6. Steuerung nach einem der Ansprüche 1 bis 5,
**dadurch gekennzeichnet,**
dass die ringförmige Steuernut (7) auf einem Teilbereich ihrer in Fließrichtung (F) verlaufenden Länge in dem der Kolbenfläche (6a) benachbarten Endbereich eine schräge oder bogenförmige Steuerfläche (7a, 7b) hat.

7. Steuerung nach einem der Ansprüche 1 bis 6,
**dadurch gekennzeichnet,**
dass der Abzweig (10a, 10b) von zwei in Fließrichtung (F) im Abstand hintereinander angeordneten Ringnuten (10a, 10b) gebildet ist, wobei an die Ringnut (10a) eine Leitung (11) zur Kupplung (K) und die Ringnut (10b) eine Leitung (12) zum Öltank angeschlossen ist.

8. Steuerung nach einem der Ansprüche 1 bis 7,
**dadurch gekennzeichnet,**
dass der Entlastungsausgang (15) von einer Ringnut gebildet ist.

9. Steuerung nach einem der Ansprüche 1 bis 8,
**dadurch gekennzeichnet,**
dass der Kolben (6) an seiner federseitigen Stirnseite eine schräge oder bogenförmige Schließkante (18) aufweist, die mit dem Entlastungsausgang (15) zusammenwirkt.

10. Steuerung nach einem der Ansprüche 1 bis 9,
**dadurch gekennzeichnet,**
daß die Federkraft (5) von einer in einer Sacklochaufnahme (19) des Regelkolbens (6) geführten Druckfeder (5) gebildet ist, die sich am Sacklochboden (19a) und an der den Austritt der Ausgangsleitung (13) zeigenden Stirnwand (9a) der Federkammer (9) abstützt.

## Claims

1. A hydraulic control for shiftable connecting elements, in particular for a separately shifted clutch on a drive engine, comprising a pump (P) for producing an oil flow, a directional control valve (WV) for determining the flow path of the oil flow, a throttle (2) as a measuring restrictor, which is disposed in a flow path (1) and which produces a pressure drop in the oil flow, a regulating valve (RV) which is connected with a feed and return (3, 4) to the flow path (1) of the first throttle (2) upstream and downstream of the throttle (2), the regulating valve having a regulating plunger (6) which is acted upon by the higher oil pressure and which is displaceable against a spring force (5), a control groove (7) which is provided on the regulating plunger (6) and which co-operates with a branch (10a, 10b) having a clutch and a tank line (11, 12), the branch being disposed between the plunger chamber (8) and the spring chamber (9) of the regulating valve (RV), and a throttle (14) as a time restrictor which is adjustable to the closing time of the clutch (K) and which is fitted into an outlet line (13) which departs from the spring chamber (9) in the end region thereof to the return (4), characterised in that the control has a load relief outlet (15) which departs from the spring chamber (9) at a spacing in front of the outlet line (13) thereof and which is connected to the return (4) and which can be shut off by the regulating plunger (6) over a short stroke (H).

2. A control according to claim 1 characterised in that the flow path (1) of the first throttle (2) is formed by a pressure line (1) connected to the oil tank (T), with inserted pump (P), from which a by-pass line (15) with inserted directional control valve (WV) departs upstream and downstream of the throttle (2).

3. A control according to one of claims 1 and 2 characterised in that the feed (3) is formed by a supply line (3) which opens into the plunger chamber (8) at the free end thereof and the return (4) is formed by a discharge line (4) which departs between the branch (10a, 10b) and the free end of the spring chamber.

4. A control according to one of claims 1 to 3 characterised in that extending into the regulating plunger (6) from the plunger face (6a) thereof which is subjected to the oil pressure is an axial bore (16) with oil flow-limiting means, from which an exit bore (16a) departs towards the control groove (7) downstream of the oil flow-limiting means (17) in the flow direction (F).

5. A control according to one of claims 1 to 4 characterised in that the control groove (7) of the regulating plunger (6) is formed by an annular groove extending therearound at the outside periphery thereof, with a linear or progressive control surface (7a, 7b) for through-flow regulation in the branch (10a, 10b).

6. A control according to one of claims 1 to 5 characterised in that the annular control groove (7) has an inclined or arcuate control surface (7a, 7b) on a part of its length extending in the flow direction (F), in the end region adjacent to the plunger face (6a).

7. A control according to one of claims 1 to 6 characterised in that the branch (10a, 10b) is formed by two annular grooves (10a, 10b) which are arranged one behind the other at a spacing in the flow direction (F), wherein connected to the annular groove (10a) is a line (11) to the clutch (K) and connected to the annular groove (10b) is a line (12) to the oil tank.

8. A control according to one of claims 1 to 7 characterised in that the load relief outlet (15) is formed by an annular groove.

9. A control according to one of claims 1 to 8 characterised in that at its spring end the plunger (18) has an inclined or arcuate closing edge (18) which co-operates with the load relief outlet (15).

10. A control according to one of claims 1 to 9 characterised in that the spring force (5) is formed by a compression spring (5) which is guided in a blind hole receiving means (19) in the regulating plunger (6) and which is supported against the bottom (19a) of the blind hole and against the end wall (9a) of the spring chamber (9), which has the exit of the outlet line (13).

## Revendications

1. Commande hydraulique pour des éléments de couplage débrayables, en particulier pour un embrayage commandé sur un moteur d'entraînement, comprenant une pompe (P) qui génère un débit d'huile, un distributeur (WV) qui détermine le chemin d'écoulement du débit d'huile, un étranglement (2) sous forme de diaphragme de mesure qui provoque une chute de pression dans le débit d'huile, une soupape de réglage (RV) qui est connectée au chemin d'écoulement (1) du premier étranglement (2) par une arrivée et un retour (3, 4), respectivement en amont et en aval de l'étranglement (2), et comporte un piston de réglage (6) sollicité par la pression de l'huile et déplacé à l'encontre d'une force élastique (5), une gorge de commande (7) aménagée dans le piston de réglage (6) qui coopère avec une dérivation (10a, 10b) prévue entre la chambre de piston (8) et la chambre àressort (9) de la soupape de réglage (RV) et communiquant avec une conduite d'embrayage et une conduite de réservoir (11, 12), ainsi qu'un second étranglement (14), sous forme d'étranglement temporaire, activable le temps de la fermeture de l'embrayage (K), qui est monté dans une conduite de sortie (13) partant de la chambre à ressort (9), dans la région de l'extrémité de celle-ci, et menant au retour (4), caractérisée en ce que la commande comporte une sortie de décharge (15), qui part de la chambre à ressort (9), à distance de la conduite de sortie (13), est connectée au retour (4) et peut être fermée par le piston de réglage (6), par une faible course (H) de celui-ci.

2. Commande selon la revendication 1, caractérisée en ce que le chemin d'écoulement (1) du premier étranglement (2) est formé d'une conduite de refoulement (1) avec une pompe (P) insérée dans celle-ci, qui est connectée au réservoir à huile (T) et à laquelle une conduite de dérivation (15a) comportant un distributeur (WV) est reliée en amont et en aval de l'étranglement (2).

3. Commande selon une des revendications 1 ou 2, caractérisée en ce que l'arrivée (3) est formée d'une conduite d'arrivée (3) disposée à l'extrémité libre de la chambre de piston (8) et débouchant dans celle-ci, et que le retour (4) est formé d'une conduite de sortie (4) piquée entre une dérivation et l'extrémité libre de la chambre de piston (8).

4. Commande selon une des revendications 1 à 3, caractérisée en ce qu'un trou (16) axial avec un diaphragme de limitation de débit d'huile s'étend dans le piston de réglage (6), à partir de la surface (6a) de celui-ci sollicitée par la pression d'huile et qu'un trou de sortie (16a) menant à une gorge de commande (7) part dudit trou axial en aval du diaphragme de limitation du débit d'huile (17) vu dans la direction d'écoulement (F).

5. Commande selon une des revendications 1 à 4, caractérisée en ce que la gorge de commande (7) du piston de réglage (6) est formée d'une gorge annulaire continue dans la surface extérieure du piston, pourvue d'une surface de commande (7a, 7b) linéaire ou progressive pour la régulation du débit dans la dérivation (10a, 10b).

6. Commande selon une des revendications 1 à 5, caractérisée en ce que la gorge de commande (7) annulaire, sur une zone partie de sa longueur s'étendant dans la direction d'écoulement (F), dans une partie d'extrémité voisine de la surface du piston (6a), présente une surface de commande (7a,7b) inclinée ou arquée.

7. Commande selon une des revendications 1 à 6, caractérisée en ce que la dérivation (10a, 10b) est formée de deux gorges annulaires (10a, 10b) espacées l'une derrière l'autre, une conduite (11) menant au moyen de couplage (K) étant connectée à la gorge (10a) et une conduite (12) menant au réservoir d'huile étant connectée à la gorge (10b).

8. Commande selon une des revendications 1 à 7, caractérisée en ce que la sortie de décharge (15) est formée par une gorge annulaire.

9. Commande selon une des revendications 1 à 8, caractérisée en ce que le piston (6) au niveau de sa face frontale côté ressort présente une arête de fermeture (18) inclinée ou arquée qui coopère avec la sortie de décharge (15).

10. Commande selon une des revendications 1 à 9, caractérisée en ce que la force élastique (5) est formée par ressort de compression (5) guidé dans un logement en forme de trou borgne (19) du piston de réglage (6), lequel ressort prend appui sur le fond (19a) du trou borgne et sur la paroi frontale (9a) de la chambre de ressort (9) tournée vers la sortie de la conduite de sortie (13).
